# EUROPEAN PATENT APPLICATION

(11) **EP 4 394 057 A1**
(43) Date of publication of application: **03.07.2024**
(21) Application number: 22886804.8
(22) Date of filing: 18.10.2022
(51) Int. Cl.: C21D 8/12, C21D 9/46, H01F 1/147

(54) **PRODUCTION METHOD FOR GRAIN-ORIENTED ELECTRICAL STEEL SHEET**

(30) Priority: 29.10.2021 JP 2021178359
(71) Applicant: JFE Steel Corporation, Tokyo 100-0011 (JP)
(72) Inventor: KAWAHARA, Kai, Tokyo 100-0011 (JP)
(74) Representative: Grünecker Patent- und Rechtsanwälte PartG mbB
(86) International application number: PCT/JP2022/038828
(87) International publication number: WO 2023/074476

(57) **Abstract**

Provided is a method of manufacturing a grain-oriented electrical steel sheet with a well-formed base film and excellent magnetic properties. After subjecting a steel sheet to cold rolling and decarburization annealing, an annealing separator containing Ti oxide in a predetermined ratio to MgO is applied to the steel sheet surface and dried, and then the steel sheet is held as a coil in a final annealing furnace and subjected to final annealing, where in a heating process of the final annealing, the atmosphere is set to H₂: 100 vol% when the maximum temperature of the coil reaches 1100 °C, and within 15 hours after the maximum temperature of the coil reaches 1100 °C, and after a temperature difference between the maximum temperature and the minimum temperature of the coil becomes 75 °C or less, the atmosphere is changed to a H₂ atmosphere containing 5 vol% or more of N₂.

## Description

### TECHNICAL FIELD

This disclosure relates to a method of manufacturing a grain-oriented electrical steel sheet with excellent magnetic properties.

### BACKGROUND

Grain-oriented electrical steel sheets have extremely excellent magnetic properties in the rolling direction, and they are mainly used as materials for iron cores inside transformers. In recent years, there has been a demand to further improve the magnetic properties of grain-oriented electrical steel sheets, so that the energy use efficiency of such transformers and other equipment can be improved.

One of the measures to improve the magnetic properties is to promote secondary recrystallization in a grain-oriented electrical steel sheet. It has been known that, during final annealing that promotes the secondary recrystallization, applying an annealing separator containing Ti to the steel sheet surface can improve the adhesion between steel sheets and promote the formation of a forsterite base film. It has also been known that in this case, the Ti contained in the annealing separator may penetrate into the steel sheet and deteriorate the formation of the base film and the magnetic properties.

As a measure to solve this problem, JP H05-195072 A (PTL 1) describes a technique for preventing Ti from penetrating or remaining in steel by setting the atmosphere for purification annealing (final annealing) to a mixed atmosphere of H₂ and N₂ in a temperature range of 1150 °C to 1250 °C during the manufacturing of grain-oriented electrical steel sheets.

### CITATION LIST

### Patent Literature

PTL 1: JP H05-195072 A

### SUMMARY

### (Technical Problem)

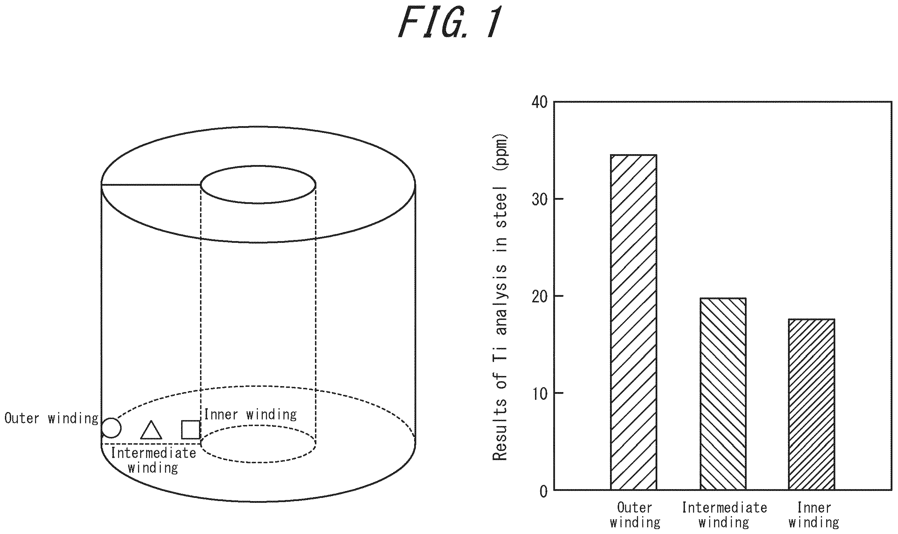

In final annealing that also serves as purification annealing, steel sheets are usually coiled and held in an annealing furnace for long-time annealing. In such final annealing, if purification annealing is performed as described in PTL 1, Ti is prevented from penetrating or remaining in the steel in the intermediate winding and inner winding portions of the coil during the annealing as illustrated in FIG. 1, but a large amount of Ti remains in the steel in the outer winding portion. Therefore, variations in Ti content are observed in the steel as a whole.

It could thus be helpful to provide a method of manufacturing a grain-oriented electrical steel sheet. With the method, it is possible to obtain a grain-oriented electrical steel sheet with a well-formed base film and excellent magnetic properties.

### (Solution to Problem)

As a result of diligent studies, we found that, in a final annealing process that promotes secondary recrystallization of a grain-oriented electrical steel sheet, controlling the temperature of a coil of the steel sheet and the atmosphere gas can effectively reduce the amount of Ti penetrating into the steel sheet and the amount of Ti remaining in the steel, where the Ti is from the annealing separator applied on the steel sheet surface, and can prevent variations in Ti content, thereby obtaining a grain-oriented electrical steel sheet with a well-formed base film and excellent magnetic properties. The present disclosure is based on the above findings.

We thus provide the following.
1. A method of manufacturing a grain-oriented electrical steel sheet, comprising subjecting a steel sheet to cold rolling to obtain a final sheet thickness, then subjecting the steel sheet to decarburization annealing, then applying an annealing separator containing 1.0 part by mass to 20 parts by mass of Ti oxide with respect to 100 parts by mass of MgO to a surface of the steel sheet, drying the annealing separator, and then holding the steel sheet as a coil in a final annealing furnace and performing final annealing to obtain a grain-oriented electrical steel sheet, wherein
   in a heating process of the final annealing, an atmosphere is H₂: 100 vol% when a maximum temperature of the coil reaches 1100 °C, and within 15 hours after a maximum temperature of the coil reaches 1100 °C, and after a temperature difference between a maximum temperature and a minimum temperature of the coil becomes 75 °C or less, the H₂: 100 vol% atmosphere is changed to a H₂ atmosphere containing 5 vol% or more of N₂.

### (Advantageous Effect)

According to the present disclosure, in a heating process of final annealing, by setting an upper limit on the time to change the atmosphere of the final annealing from a H₂ atmosphere to an atmosphere containing N₂ and by changing the atmosphere as described above after reducing the temperature difference inside a coil, it is possible to effectively suppress Ti residuals in the steel of the entire coil and suppress variations in Ti content, and to obtain a grain-oriented electrical steel sheet with a well-formed base film and excellent magnetic properties.

### BRIEF DESCRIPTION OF THE DRAWINGS

In the accompanying drawings:
FIG. 1 illustrates the results of Ti analysis in the outer winding, intermediate winding, and inner winding of a conventional coiled steel sheet.

### DETAILED DESCRIPTION

The following describes the present disclosure in detail.

The method of manufacturing a grain-oriented electrical steel sheet of the present disclosure is particularly characterized by the conditions of final annealing. In the following description, a grain-oriented electrical steel sheet may also be referred to simply as a steel sheet.

In the manufacturing method of the present disclosure, a steel sheet is subjected to cold rolling to obtain a final sheet thickness, then the steel sheet is subjected to decarburization annealing, then an annealing separator containing 1.0 part by mass to 20 parts by mass of Ti oxide with respect to 100 parts by mass of MgO is applied to the steel sheet and dried, and then final annealing is performed.

As used herein, the final sheet thickness is a general sheet thickness for a grain-oriented electrical steel sheet, and specifically, it is preferably in a range of 0.35 mm or less.

In the cold rolling of the present disclosure, cold rolling conditions commonly used in the manufacture of grain-oriented electrical steel sheets can be used without particular restriction.

In the decarburization annealing of the present disclosure, decarburization annealing conditions commonly used in the manufacture of grain-oriented electrical steel sheets can be used without particular restriction.

In the manufacturing method of the present disclosure, an annealing separator containing 1.0 part by mass to 20 parts by mass of Ti oxide with respect to 100 parts by mass of MgO is used.

The Ti oxide is not particularly limited, but TiO₂ is preferred.

If the content of Ti oxide is less than 1.0 part by mass with respect to 100 parts by mass of MgO in the annealing separator, a film cannot be sufficiently formed during final annealing. On the other hand, if the content of Ti oxide exceeds 20 parts by mass with respect to 100 parts by mass of MgO in the annealing separator, the amount of Ti penetrating into the steel increases, causing deterioration of magnetic properties. From the same viewpoint, the content of Ti oxide is preferably 2.0 parts by mass or more with respect to 100 parts by mass of MgO in the annealing separator. The content of Ti oxide is preferably 10 parts by mass or less and more preferably 8 parts by mass or less with respect to 100 parts by mass of MgO.

When applying the annealing separator in the present disclosure, methods and conditions for applying an annealing separator commonly used in the manufacture of grain-oriented electrical steel sheets can be used without particular restriction.

Further, when drying the annealing separator, methods and conditions for drying an annealing separator commonly used in the manufacture of grain-oriented electrical steel sheets can be used without particular restriction.

In the manufacturing method of the present disclosure, after applying the annealing separator to the surface of the steel sheet and drying the annealing separator, the steel sheet is held as a coil in a final annealing furnace and subjected to final annealing. In a heating process of the final annealing, the atmosphere at least when the maximum temperature of the coil reaches 1100 °C needs to be an atmosphere of H₂: 100 vol%.

This is because, if the condition is not satisfied, nitrogen penetrates into the steel sheet and deteriorates the magnetic properties. In the present disclosure, it is also acceptable that the atmosphere is made into H₂: 100 vol% before the maximum temperature of the coil reaches 1100 °C, and the maximum temperature of the coil is raised to 1100 °C and the heating is continued while keeping the atmosphere of H₂: 100 vol%.

In the present disclosure, thermocouples are placed at two locations on the bottom of a sample coil, one on the outer winding side and the other on the center of the intermediate winding. Of these thermocouples, the temperature measured by the thermocouple on the outer winding side is defined as the maximum temperature of the coil. On the other hand, the temperature measured by the thermocouple on the center of the intermediate winding is defined as the minimum temperature of the coil.

Further, in a heating process of the final annealing in the manufacturing method of the present disclosure, within 15 hours after the maximum temperature of the coil reaches 1100 °C, and after the temperature difference between the maximum temperature and the minimum temperature of the coil becomes 75 °C or less, the H₂: 100 vol% atmosphere is changed to a H₂ atmosphere containing 5 vol% or more of N₂.

In the present disclosure, the starting point of the timing of change to a H₂ atmosphere containing N₂ is a point when the maximum temperature of the coil reaches 1100 °C. The reason why the starting point of the timing is set at a point when the temperature reaches 1100 °C is that, if the temperature is lower than 1100 °C, the Ti oxide (especially titanium oxide) in the annealing separator cannot be decomposed and cannot be fixed in the film as TiN.

After the maximum temperature of the coil reaches 1100 °C, the time to change the H₂: 100 vol% atmosphere to a H₂ atmosphere containing N₂ is set within 15 hours. This is because, if the time exceeds 15 hours, Ti will penetrate into the steel sheet and deteriorate the magnetic properties. From the same viewpoint, after the maximum temperature of the coil reaches 1100 °C, the time to change the H₂: 100 vol% atmosphere to a H₂ atmosphere containing N₂ is preferably within 12 hours and more preferably within 10 hours. On the other hand, the lower limit of the time is typically the time until the temperature difference between the maximum temperature and the minimum temperature of the coil becomes 75 °C or less. Specifically, the lower limit of the time is about 8 hours. If the time is shorter than 8 hours, the reaction between titanium and nitrogen may be insufficient. The steel sheet as a coil used in the present disclosure may have extremely large dimensions. In such cases, the difference between the maximum temperature and the minimum temperature of the coil usually exceeds 75 °C when the maximum temperature of the coil reaches 1100 °C, and it takes some time for the difference to become 75 °C or less.

In the present disclosure, it is essential that, after the maximum temperature of the coil reaches 1100 °C, the temperature difference between the maximum temperature and the minimum temperature of the coil should be 75 °C or less at the timing of changing the H₂: 100 vol% atmosphere to a H₂ atmosphere containing N₂. In other words, it is essential that the temperature difference between the maximum temperature and the minimum temperature of the coil should be 75 °C or less at the latest 15 hours after the maximum temperature of the coil reaches 1100 °C.

If the atmosphere is changed with the temperature difference between the maximum temperature and the minimum temperature exceeding 75 °C, the formation of base film is deteriorated in the inner winding of the coil. On the other hand, the temperature difference between the maximum temperature and the minimum temperature of the coil at the timing of the atmosphere change is preferably as small as possible, and it may be 0 °C. Industrially, it is about 50 °C.

Methods of suppressing heat input from the outside, especially methods of suppressing heat input to the outer winding side, can be applied at the right time to effectively control the temperature difference as described above.

The H₂ atmosphere containing N₂ after the change is an atmosphere containing 5 vol% or more of N₂. This is because, if the amount of N₂ is less than 5 vol%, the reaction with titanium is insufficient. On the other hand, the upper limit of the amount of N₂ is not particularly limited, but it is about 25 vol% or less from the viewpoint of productivity. From the same viewpoint, the N₂ content in the H₂ atmosphere after the change is preferably 8 vol% or more. Further, it is preferably 20 vol% or less and more preferably 15 vol% or less.

In the present disclosure, the outer winding of the coil is defined as a range of 20 % of the coil radius from the outermost circumference of the coil. In the present disclosure, the inner winding of the coil is defined as a range of 20 % of the coil radius from the innermost circumference of the coil. In the present disclosure, the intermediate winding of the coil is defined as a range excluding the outer winding and the inner winding of the coil.

In the present disclosure, the outer winding portion, inner winding portion, and intermediate winding portion of the coil are defined as portions having the above ranges, respectively.

Conditions of the final annealing other than those described above are not particularly limited, and conventional methods may be followed.

Regarding the conditions of the steel sheet manufacturing method not mentioned above, any conventional method can be followed.

### EXAMPLES

A steel sheet was subjected to cold rolling to obtain a sheet thickness of 0.23 mm, then the steel sheet was subjected to decarburization annealing, then an annealing separator containing 5 parts by mass of TiOz with respect to 100 parts by mass of MgO was applied to the surface of the steel sheet and dried, and then the steel sheet was held as a coil in a final annealing furnace and subjected to final annealing to obtain a grain-oriented electrical steel sheet.

During the final annealing, thermocouples were placed at two locations on the bottom of the coil, one on the outer winding portion and the other on the center of the intermediate winding. Further, in the final annealing, the atmosphere was set to H₂: 100 vol% when the maximum temperature of the coil (the temperature of the outer winding portion) reached 1100 °C, and the H₂: 100 vol% atmosphere was changed to a H₂ atmosphere containing 10 vol% of N₂ at the timing listed in Table 1. Next, when the maximum temperature of the coil reached 1200 °C, the atmosphere was changed to H₂: 100 vol%, and the coil was held for 10 hours and then cooled.

The Ti content in the obtained grain-oriented electrical steel sheet (coil) was measured according to a previously prepared calibration curve using energy dispersive X-ray analysis (EDX). Table 1 lists the Ti content (Ti residue) in the outer winding portion of the coil.

The iron loss of the obtained grain-oriented electrical steel sheet (coil) was measured as the iron loss W _{17/50} for 1 kg of the steel sheet when magnetized to 1.7 T in an AC magnetic field at an excitation frequency of 50 Hz. Table 1 lists the iron loss W _{17/50} in the outer winding portion of the coil.

The obtained grain-oriented electrical steel sheet (coil) was visually observed in terms of the formation of base film. Table 1 lists the results of the observation.

### [Table 1]

**Table 1**

| No. | Timing of atmosphere change | | Outer winding portion of coil | | Formation of base film | Remarks |
|---|---|---|---|---|---|---|
| | Elapsed time (*1) [h] | Temperature difference inside coil (maximum-minimum) [°C] | Ti content [ppm] | Iron loss W_{17/50} [W/kg] | | |
| 1 | 20 | 20 | 40 | 0.92 | Good throughout the length | Comparative Example |
| 2 | 10 | 100 | 30 | 0.90 | Poor in the inner winding | Comparative Example |
| 3 | 15 | 75 | 20 | 0.88 | Good throughout the length | Example |
| 4 | 10 | 50 | 15 | 0.86 | Good throughout the length | Example |
| (*1) Elapsed time after the maximum temperature of the coil reached 1100 °C | | | | | | |

Table 1 indicates that, by setting an upper limit on the time to change a H₂ atmosphere to an atmosphere containing N₂ and by changing the atmosphere after reducing the temperature difference inside a coil, it is possible to suppress Ti residuals in the steel of the entire coil (especially Ti residuals in the outer winding portion of the coil) and suppress variations in Ti content, thereby obtaining a grain-oriented electrical steel sheet with a well-formed base film and excellent magnetic properties.

## Claims

1. A method of manufacturing a grain-oriented electrical steel sheet, comprising subjecting a steel sheet to cold rolling to obtain a final sheet thickness, then subjecting the steel sheet to decarburization annealing, then applying an annealing separator containing 1.0 part by mass to 20 parts by mass of Ti oxide with respect to 100 parts by mass of MgO to a surface of the steel sheet, drying the annealing separator, and then holding the steel sheet as a coil in a final annealing furnace and performing final annealing to obtain a grain-oriented electrical steel sheet, wherein
in a heating process of the final annealing, an atmosphere is H₂: 100 vol% when a maximum temperature of the coil reaches 1100 °C, and within 15 hours after a maximum temperature of the coil reaches 1100 °C, and after a temperature difference between a maximum temperature and a minimum temperature of the coil becomes 75 °C or less, the H₂: 100 vol% atmosphere is changed to a H₂ atmosphere containing 5 vol% or more of N₂.
